# EUROPÄISCHE PATENTSCHRIFT

(11) **EP 2 173 513 B1**
(45) Veröffentlichungstag und Bekanntmachung des Hinweises auf die Patenterteilung: **03.07.2013**
(21) Anmeldenummer: 08786437.7
(22) Anmeldetag: 25.07.2008
(51) Int. Cl.: B23K 9/127, B25J 17/02, B23K 9/29

(54) **SCHWEISSVORRICHTUNG MIT MECHANISCHEM NAHTVERFOLGUNGSSYSTEM**
WELDING DEVICE HAVING MECHANICAL SEAM TRACKING SYSTEM
DISPOSITIF DE SOUDAGE DOTÉ D'UN SYSTÈME MÉCANIQUE DE SUIVI DU CORDON

(30) Priorität: 03.08.2007 AT 12202007
(43) Veröffentlichungstag der Anmeldung: 14.04.2010
(73) Patentinhaber: Inocon Technologie Gesellschaft m.b.H, 4800 Attnang-Puchheim (AT)
(72) Erfinder: SCHWANKHART, Gerhard, A-4800 Attnang-Puchheim (AT); SCHUH, Johann, A-4690 Schwanenstadt (AT)
(74) Vertreter: KLIMENT & HENHAPEL
(86) Internationale Anmeldenummer: PCT/EP2008/059776
(87) Internationale Veröffentlichungsnummer: WO 2009/019145

(56) Entgegenhaltungen:
- US-A- 3 328 556
- US-A- 4 834 440
- US-A- 5 355 634

## Beschreibung

Die Erfindung betrifft eine Schweißvorrichtung zur Befestigung an einem Manipulator, der die Schweißvorrichtung entlang der Verbindungsfuge von Werkstücken bewegt, wobei die Schweißvorrichtung einen Schweißkopf aufweist, gemäß dem Oberbegriff von Anspruch 1. Eine solche Schweißvorrichtung ist aus der US 3 328 556 bekannt.

Schweißvorrichtungen dieser Art werden etwa in der Automobilindustrie eingesetzt, wo etwa Karosserien fest in Einspannvorrichtungen fixiert sind, und ein Schweißkopf durch einen Manipulator, etwa ein beweglicher Roboterarm, eine Verbindungsnaht zur Erstellung einer Schweiß- oder Lötnaht zum Fügen zweier Werkstücke entlang geführt wird. Der Verlauf der Verbindungsnaht ist prinzipiell bekannt, und der Roboterarm wird entsprechend programmiert, sodass der Verbindungsnaht möglichst präzise gefolgt wird.

Durch Fertigungstoleranzen der Werkstücke liegt aber die Verbindungsnaht zumeist nicht an den vorgegebenen Stellen, wenn unterschiedliche Werkstücke etwa im Verlauf einer Fertigungsstraße die Schweißstation passieren. Die Abweichungen können dabei durchaus mehrere Millimeter betragen. Um diese Abweichungen zwischen der vorgegebenen Schweißbahn, der Führungsmaschine und dem tatsächlichen Verlauf der Schweißbahn zu korrigieren, werden Nahtverfolgungssysteme verwendet.

### STAND DER TECHNIK

Gemäß dem Stand der Technik sind unterschiedliche Nahtverfolgungssysteme bekannt.

Das Dokument G 87 13 471.3 beschreibt ein mechanisches Führungssystem mit Rollentaster und Kreuzschlitten für ein Laserschweißgerät. Das Führungssystem bewegt dabei Ablenkspiegel für das Laserlicht, und erreicht so eine entsprechende Bahnkorrektur. Für ein Lichtbogenverfahren wäre ein Führungssystem dieser Art aber nicht geeignet, da der gesamte Aufbau bestehend aus Schweißkopf und Drahtzuführung bewegt werden müsste. Der in der G 87 13 471.3 vorgeschlagene Kreuzschlitten zur mechanischen Aufhängung wäre überdies zu träge für schnelle Bahnkorrekturen.

So sind etwa taktile Systeme bekannt, die mit einem mechanischen Taster arbeiten, der entlang einer Nahtkante geführt ist, und deren Verlauf abtastet. Ein solches System ist etwa aus der DE 100 06 852 C5 bekannt, bei dem die abschmelzende Drahtspitze des Schweißzusatzdrahtes als Tastelement verwendet wird. Die Andruckkraft des Zusatzdrahtes wird dabei durch entsprechende Sensoren erfasst, die somit Bahnabweichungen vertikal und seitlich zur Naht registrieren. Ein solches System verfügt zwar über den Vorteil der Verschleißfreiheit, da der mechanisch stark belastete Taster durch den verarbeiteten Zusatzdraht selbst gebildet wird. Allerdings erlaubt die Umsetzung detektierter Abweichungen der Naht in ausgleichende Stellbewegungen über eine Druckmesseinrichtung und elektronische Steuerungen sowie Stellmotoren nur langsame Schweißgeschwindigkeiten. Bei Vorschubgeschwindigkeiten von etwa 2-3 m/min sind Systeme dieser Art zu träge, und neigen außerdem zum Aufschwingen. Ähnliches gilt für alle Systeme mit einem mechanischen Taster, bei dem die Signale über Abweichungen des Nahtverlaufes über eine Regelelektronik den Stellmotoren einer Stellvorrichtung zugeführt werden.

In der US 3 328 556 wird ein Schweißkopf beschrieben, der über ein Parallelogrammgelenk an einem Manipulator befestigt ist. In einer Verbindungsfuge ist des Weiteren ein Führungssporn geführt, der mit dem Schweißkopf verbunden ist. Ein solches System stellt somit ein mechanisches Nahtverfolgungssystem dar. Die US 5 355 634 und die US 4 834 440 beschreiben hingegen Führungssysteme für Roboter-geführte Werkzeuge, die durch nicht-mechanische Steuerungen bewegt werden.

Eine Alternative stellen optische Systeme dar. Die DE 296 06 375 U1 bezieht sich auf Laserschweißgeräte mit einem Laserkopf, einer Andrückrolle und Schweißzusatzvorrichtungen, wie etwa einer Drahtzuführung. Die Andrückrolle läuft neben der Naht, und eine Stellvorrichtung erlaubt Bewegungen des Laserkopfes relativ zur Andrückrolle und der Naht, wobei aber die Drahtzuführung mit dem Laserkopf mit bewegt wird. Die Stellvorrichtung besteht aus einer Dreheinrichtung und einer Verschiebeeinrichtung, und wir mithilfe eines Nahtdetektors angesteuert. Beim Nahtdetektor handelt es sich um einen optischen Sensor, der die Ist-Lage der Naht in Bewegungsrichtung erfasst und Abweichungen der Ist-Lage von der Soll-Lage signalisiert. Optische Systeme sind aber bei unterschiedlicher Oberflächenbeschaffenheit fremdlichtempfindlich und dadurch störanfällig. Des Weiteren erfordern sie umfangreiche elektronische Steuerungen, die entsprechend störanfällig sind. Zumeist funktionieren sie auch nur dann, wenn in einem vorhergehenden Arbeitsschritt die Schweißbahn abgefahren wird, die Ist-Lage gespeichert, und erst in einem zweiten Arbeitsschritt die Schweißung erfolgt. Der damit verbundene Zeitverlust ist aber zumeist nicht akzeptabel. Schließlich zeigen sich in der Praxis auch Schwierigkeiten bei Schweißradien unter 40 mm, da der optische Sensor aufgrund seiner Größe zum Schweißkopf verlaufend orientiert ist.

Schließlich sind noch elektrische Regelsysteme bei Lichtbogenverfahren bekannt, die sich die Spannungsänderung des Lichtbogens bei Maßabweichungen zu Nutze machen, aber zumeist nur eine Nachregelung des vertikalen Abstandes zwischen Schweißkopf und Werkstück erlauben. Diese Art der Regelung gehört überhaupt zu den ältesten Lichtbogenregelsystemen.

### DARSTELLUNG DER ERFINDUNG

Es ist daher das Ziel der Erfindung, eine Schweißvorrichtung zu verwirklichen, die eine rasche Abtastung des wahren Nahtverlaufes und eine entsprechende Nachjustierung des Schweißkopfes in Echtzeit auch bei hohen Vorschubgeschwindigkeiten erlaubt. Dabei soll sich keine Winkellageänderung des Schweißkopfes relativ zum Werkstück bei vorgenommenen Bahnkorrekturen einstellen. Des Weiteren soll erreicht werden, dass sich speziell bei Lichtbogenverfahren mit Kaltdrahtzuführung keine Abstandsänderungen zwischen der Kathode des Schweißkopfes und der Spitze des Zusatzdrahtes während des Schweißvorganges ergeben, insbesondere auch bei Schwingungen des führenden Roboterarmes. Die erfindungsgemäße Vorrichtung soll des Weiteren unempfindlich gegenüber elektromagnetischen Einflüssen und Fremdlicht sein, sowie eine möglichst geringe Masseträgheit bei möglichst hoher Leichtgängigkeit der Regelmechanik aufweisen. Diese Ziele werden durch die Merkmale von Anspruch 1 erreicht.

Anspruch 1 bezieht sich auf eine Schweißvorrichtung zur Befestigung an einem Manipulator, der die Schweißvorrichtung entlang der Verbindungsfuge von Werkstücken bewegt, wobei die Schweißvorrichtung einen Schweißkopf, eine Elektrode und eine Drahtzuführung zur Zufuhr eines Zusatzdrahtes zur Elektrode aufweist, und der Schweißkopf über eine mechanische Stelleinrichtung, die ein Parallelogrammgelenk und einen Führungssporn umfasst, mit dem Manipulator verbunden ist, wobei der Führungssporn der Geometrie der Verbindungsfuge angepasst und über einen Führungshebel mit dem Schweißkopf verbunden ist, und der Schweißkopf mit dem Parallelogrammgelenk verbunden ist. Erfindungsgemäß ist hierbei vorgesehen, dass der Zusatzdraht über den Führungssporn geführt ist, und den Führungssporn über eine Drahtführungsdüse verlässt. Eine solche Anordnung stellt eine mechanische Stellvorrichtung sicher, bei der Änderungen des tatsächlichen Verlaufes der Verbindungsfuge durch den Führungssporn festgestellt werden. Änderungen des Fugenverlaufes wirken sich nämlich auf die Positionierung des Führungssporns aus, der seine Bewegungen über den Führungshebel und den Schweißkopf auf die Stelleinrichtung überträgt. Die Stelleinrichtung regelt die Positionierung des Schweißkopfes unabhängig von den Bewegungen des Manipulators auf den geänderten Fugenverlauf nach. Aufgrund der mechanischen Detektierung des wahren Fugenverlaufes erfolgt eine rasche Abtastung des wahren Nahtverlaufes, und eine entsprechende Nachjustierung des Schweißkopfes in Echtzeit auch bei hohen Vorschubgeschwindigkeiten. Dabei stellen sich aufgrund der Verwendung des Parallelogrammgelenks keine Winkellageänderungen des Schweißkopfes relativ zum Werkstück bei vorgenommenen Bahnkorrekturen ein. Des Weiteren wird durch die feste Montage des Führungssporns und des Führungshebels am Schweißkopf erreicht, dass sich speziell bei Lichtbogenverfahren mit Kaltdrahtzuführung keine Abstandsänderungen zwischen der Elektrode des Schweißkopfes und der Spitze des Zusatzdrahtes während des Schweißvorganges ergeben, insbesondere auch bei Schwingungen des führenden Manipulators. Die erfindungsgemäße Vorrichtung ist aufgrund der mechanischen Umsetzung der Stelleinrichtung des Weiteren unempfindlich gegenüber elektromagnetische Einflüsse und Fremdlicht, und der Abstand zwischen dem Führungssporn und dem Fokuspunkt des Plasmastrahls kann reduziert werden.

Anspruch 2 sieht vor, dass das Parallelogrammgelenk aus zwei Parallelogrammschwingen, die über einen vertikal verschiebbaren Verbindungshebel gekoppelt sind und jeweils zwei Parallelogrammlenker umfassen, gebildet wird, wobei die beiden Parallelogrammlenker der ersten Parallelogrammschwinge an einem mit dem Manipulator fest verbundenen Rahmenelement angelenkt ist, und an ihrem jeweils anderen Ende an einem Vertikalabschnitt des Verbindungshebels schwenkbar befestigt sind, und die beiden Parallelogrammlenker der zweiten Parallelogrammschwinge an einem Horizontalabschnitt des Verbindungshebels angelenkt sind, und an ihrem jeweils anderen Ende an einem Horizontallenker, der mit dem Schweißkopf verbunden ist, schwenkbar befestigt sind.

Gemäß Anspruch 3 umfasst die Stelleinrichtung weiters einen Vertikalzylinder und einen Horizontalzylinder, vorzugsweise in Form von Pneumatikzylindern, die sich jeweils am Rahmenelement abstützen, wobei der Stempel des Vertikalzylinders mit dem Verbindungshebel verbunden ist und die vertikale Verschiebung des Verbindungshebels bewirkt, und der Stempel des Horizontalzylinders an einem der beiden Parallelogrammlenker der zweiten Parallelogrammschwinge angelenkt ist und eine horizontale Verschiebung des Horizontallenkers bewirkt. Dadurch können die Andruckkräfte des Zusatzdrahtes auf das Werkstück in horizontaler und vertikaler Richtung geregelt werden. Diese Zylinder können auch eingesetzt werden, um das Eigengewicht der Stelleinrichtung auszugleichen, sodass eine geringe Masseträgheit bei hoher Leichtgängigkeit der Regelmechanik erzielt werden kann.

Anspruch 4 sieht vor, dass die Stelleinrichtung weiters einen Arretierzylinder umfasst, der auf einer der beiden Parallelogrammlenker der zweiten Parallelogrammschwinge befestigt und mit einem Kegelbolzen versehen ist, der mit einer Kegelpfanne am vertikalen Abschnitt des Verbindungshebels zusammenwirkt. Dadurch kann der horizontale Ausgleich über die beiden zweiten Parallelogrammlenker in der Mittelstellung fixiert werden, sodass lediglich eine Bewegung in vertikaler Richtung möglich ist.

Gemäß Anspruch 5 umfasst die Stelleinrichtung weiters einen Klemmzylinder, der am Rahmenelement befestigt ist, sowie ein Klemmblech, das fest mit dem Schweißkopf verbunden ist, wobei bei Betätigung des Klemmzylinders das Klemmblech in reibungsschlüssiger Verbindung mit einem Klemmarm gerät, der Teil des Rahmenelements ist. Der Klemmzylinder ermöglicht somit eine Überbrückung des Parallelogrammgelenks, indem mithilfe des Klemmblechs eine starre Verbindung zwischen dem Rahmenelement und dem Schweißkopf hergestellt wird. Der Schweißkopf kann auf diese Weise in jeder beliebigen Stellung fixiert werden, was etwa am Ende von Schweißbahnen vorteilhaft ist, wenn der Führungssporn keine Führungsfunktion mehr wahrnehmen kann, oder beim Abfahren enger Radien.

Gemäß Anspruch 6 können zur Sicherung der Arbeitsbereichsgrenzen des Parallelogrammgelenks Grenztaster vorgesehen sein. Gemäß Anspruch 7 ist des Weiteren der Führungssporn mit dem Führungshebel lösbar verbunden, was ein leichtes Austauschen des Führungssporns ermöglicht.

Gemäß Anspruch 8 weist die Drahtführungsdüse eine ovale Austrittsöffnung für den Zusatzdraht auf. Aufgrund des geringen Abstandes ist gemäß Anspruch 9 vorgesehen, dass der Führungshebel mit einer Kühlmittelzufuhr versehen ist.

Anspruch 10 sieht schließlich vor, dass der Schweißkopf über einen Kreuzschlitten mit dem Führungshebel verbunden ist,
wobei der Kreuzschlitten zwei Justierschrauben zur Veränderung der relativen Lage des mit dem Führungshebel verbundenen Führungssporns zur Elektrode in Höhen- und Seitenlage aufweist.

### KURZE BESCHREIBUNG DER FIGUREN

Eine Ausführungsform der Erfindung wird im Folgenden anhand der beiliegenden Figuren näher erläutert. Es zeigt hierbei die
Fig. 1 eine Ausführungsform einer erfindungsgemäßen Schweißvorrichtung,
Fig. 2 die Schweißvorrichtung gemäß Fig. 1 von einer um 90° gedrehten Ansicht,
Fig. 3 die Schweißvorrichtung gemäß Fig. 1 von einer um 180° gedrehten Ansicht,
Fig. 4 eine Darstellung wesentlicher Komponenten der Stelleinrichtung, und

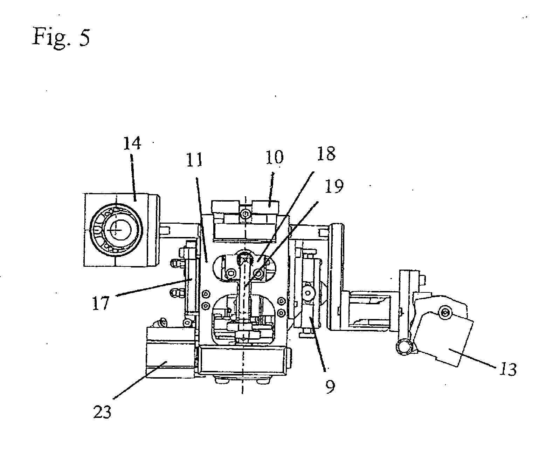

Fig. 5 die Schweißvorrichtung gemäß Fig. 1 von oben gesehen.

### WEGE ZUR AUSFÜHRUNG DER ERFINDUNG

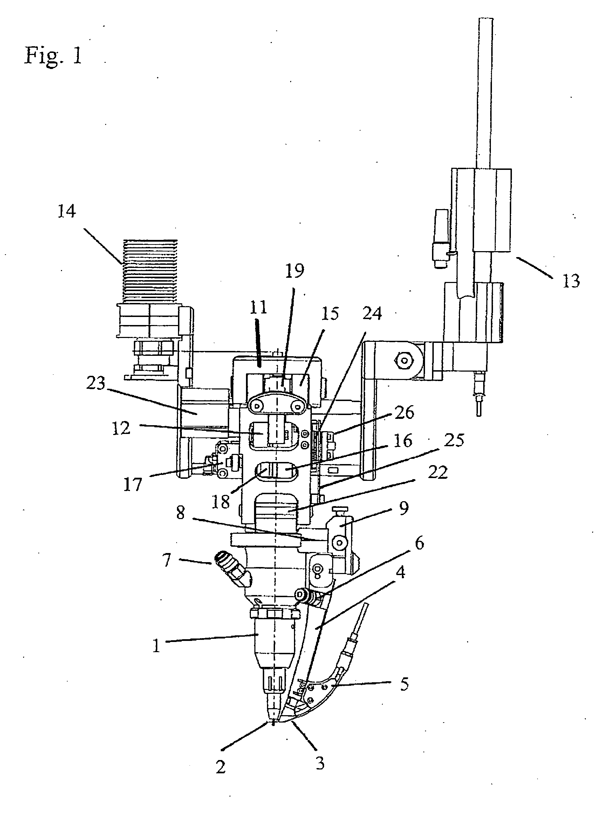

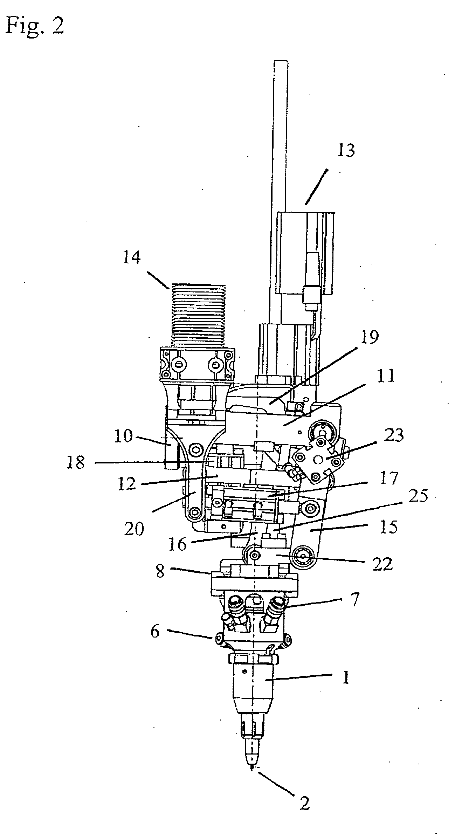

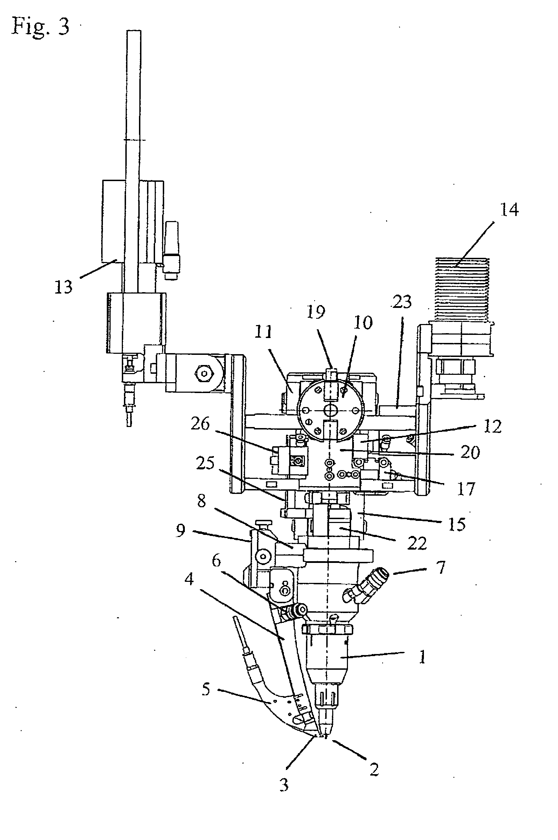

Anhand der Fig. 1-3 wird zunächst auf den allgemeinen Aufbau einer Ausführungsform der erfindungsgemäßen Schweißvorrichtung eingegangen.

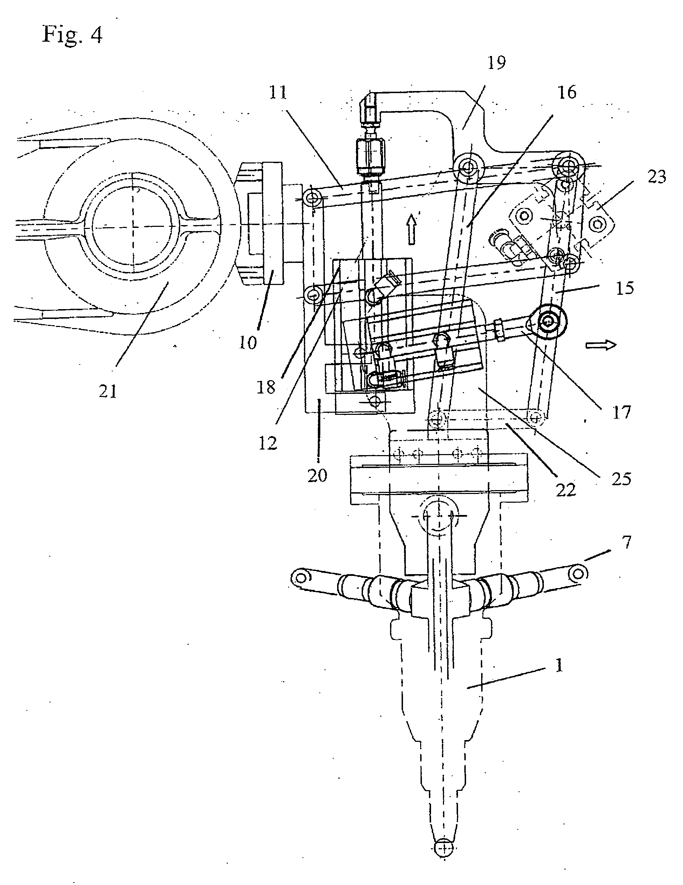

Die Schweißvorrichtung umfasst im Wesentlichen den Schweißkopf 1, der über eine Stelleinrichtung an einem Manipulator 21 (siehe Fig. 4; in den Fig. 1-3 nicht ersichtlich) befestigt ist. Die Befestigung der Stelleinrichtung am Manipulator 21 erfolgt dabei über einen Aufnahmeflansch 10, mit dem wiederum das Rahmenelement 20 fest verbunden ist. Das Rahmenelement 20 dient als Halterung für den Drahtvorschub 13, über den ein gemeinsam mit der Drahtzuführung 5 Schweißzusatzdraht zugeführt wird, und der Medienzuführung 14, über die gemeinsam mit den Medieneinlässen 7 Schweißgas zugeführt wird. Das Rahmenelement 20 dient des Weiteren als Halterung für die Stelleinrichtung, die im Wesentlichen aus einem Parallelogrammgelenk, einem Führungssporn 3 und dem Führungshebel 4, sowie einem Horizontalzylinder 17, einem Vertikalzylinder 18, einem Arretierzylinder 23 und einem Klemmzylinder 24 gebildet wird. Diese Komponenten werden im Folgenden noch genauer erläutert werden. Am Parallelgrammgelenk ist der Schweißkopf 1 befestigt, vorzugsweise über eine lösbare Verbindung, sodass der Schweißkopf für Reinigungs- oder Wartungsarbeiten rasch abmontiert werden kann, ohne die gesamte Schweißvorrichtung vom Manipulator 21 abnehmen zu müssen.

Das in den Fig. 1-4 gezeigte Ausführungsbeispiel stellt ein Plasmaschweißgerät dar, das vom Anmelder etwa unter der Bezeichnung Plasmatron® erhältlich ist, die Erfindung ist aber prinzipiell auf alle Schweißgeräte anwendbar. Bei einem Plasmaschweißgerät der gezeigten Art wird das Plasma vor der Düse erzeugt und nicht, wie ansonsten üblich, innerhalb der Düse. Gleichzeitig wird der Plasmastrahl zu einem Fokuspunkt mit einem konstruktiv wählbaren Durchmesser und einem ausgeprägten "Flaschenhals" fokussiert, also einer Zone gleichen Durchmessers des Fokuspunktes mit bis zu 4 mm Länge. Daraus resultieren einerseits der sehr hohe Wirkungsgrad dieses Schweiß-Verfahrens, und andererseits die hohe Leistungsdichte des Lichtbogens.

Die Elektrode 2 des Schweißkopfs, die hier als Kathode betrieben wird, steht bei der gezeigten Ausführungsform bewusst ca. 1,5 mm über den Düsenrand vor. Dadurch kann stechend geschweißt werden, und ein Überspringen des Lichtbogens auf den Düsenrand wird unterdrückt. Damit sind hohe Schweißgeschwindigkeiten möglich. Durch die Wahl des Schweißgasgemisches, der Stellung des Schweißkopfs, des Stromes und der Düsenform ergeben sich zahlreiche anwendungsspezifische Variationsmöglichkeiten, wie etwa Karosserielötungen in der Automobilindustrie, Verschweißung von Sintermetallen, Wellenschweißungen im Fahrzeugbau, Aluminiumschweißungen, oder Schweißungen für Druckbehälter. Dabei kann mit oder ohne Zusatzmaterial gearbeitet werden, wobei sich Zusatzmaterial besonders bei Kehlnähten empfiehlt, oder wenn größere Spalte zu überbrücken sind. Des Weiteren kann ein Schweißvorgang gewählt werden, oder ein Lötvorgang. Letzteres empfiehlt sich etwa beim Fügen von verzinkten Blechen, da hier bei einer Schweißung Zinkdämpfe entstehen, die für den Verarbeitungsprozess störend sind. Eine sehr erfolgreiche Methode zur Vermeidung von Zinkdampfstörungen ist das Löten mit Zusatzwerkstoffen. Bei diesen Stoffen liegt der Schmelzpunkt unter oder nicht wesentlich über dem des Zinks. Hervorragende Ergebnisse erzielt dabei etwa das CuSi3-Lot.

Am Schweißkopf 1 ist über eine Haltemanschette 8 und einen Kreuzschlitten 9 ein Führungshebel 4 befestigt, der an seinem freien Ende einen Führungssporn 3 aufweist. Der Kreuzschlitten 9 weist zwei Justierschrauben auf, mit denen die relative Lage des Führungshebels 4, und somit des Führungssporns 3 zur Elektrode 2 in Höhen- und Seitenlage verändert werden kann.

Der Führungssporn 3 ist der Geometrie der Verbindungsfuge (in den Fig. 1-4 nicht ersichtlich) angepasst, und wird im Betrieb in die Fuge eingesetzt, und zwar in Schweißrichtung gesehen vor der Elektrode 2. Der Führungssporn 3 folgt während des Schweißvorganges der Verbindungsfuge, und detektiert Änderungen des Fugenverlaufes. Da es hierzu vorteilhaft ist, wenn zwischen dem Führungssporn 3 und dem Fokuspunkt des Plasmastrahls ein möglichst geringer Abstand besteht, wird der Führungssporn 3 möglichst nahe an der Elektrode 2 angeordnet. Daher ist in der gezeigten Ausführungsform auch vorgesehen, dass der Zusatzdraht über den Führungssporn 3 zum Fokuspunkt geführt wird, und den Führungssporn 3 über eine Drahtführungsdüse mit vorzugsweise ovaler Austrittsöffnung verlässt. Die ovale Austrittsöffnung empfiehlt sich deshalb, weil der Zusatzdraht in der Regel aufgespult ist, und im Zuge des Abwickelns daher einen unterschiedlichen Biegeradius aufweist. Der Zusatzdraht läuft daher mit unterschiedlichem Widerstand durch die Drahtführungsdüse, und verursacht dadurch unerwünschte Schwingungen. Mit einer ovalen Austrittsöffnung kann dieser Effekt minimiert werden.

Aufgrund der Nähe des Führungssporns 3 zur Elektrode 2 ist es des Weiteren vorteilhaft, eine Kühlung des Führungshebels 4 und des Führungssporns 3 vorzusehen, wobei das Kühlmedium über die Kühlmittelzufuhr 6 zugeführt wird. Auch für den Führungssporn 3 wird es vorteilhaft sein, eine lösbare Verbindung mit dem Führungshebel 4 und der Drahtzuführung 5 vorzusehen, um ihn rasch und einfach austauschen zu können.

Änderungen des Fugenverlaufes wirken sich auf die Positionierung des Führungssporns 3 aus, der seine Bewegungen über den Führungshebel 4 und den Schweißkopf 1 auf die Stelleinrichtung überträgt, die die Aufgabe hat, die Positionierung des Schweißkopfes 1 unabhängig von den Bewegungen des Manipulators 21 auf den geänderten Fugenverlauf entsprechend einzustellen, sodass die Andrückkräfte des Führungssporns 3 auf das Werkstück wieder innerhalb vorgegebener Werte fallen. Die Stelleinrichtung umfasst insbesondere ein 2-achsiges Parallelogrammgelenk mit zwei Parallelogrammschwingen, das nun näher anhand der Fig. 4 erläutert werden soll. Dabei werden in Anlehnung an die Darstellungen der Fig. 1 bis 4 die Begriffe "horizontal" und "vertikal" gebraucht, wobei sich aufgrund der Bewegungen des Manipulators 21 und der Schweißvorrichtung die tatsächliche räumliche Lage der entsprechenden Komponenten selbstverständlich ändern kann.

Das Parallelogrammgelenk hat den folgenden Aufbau: Zwei erste Parallelogrammlenker 11,12 sind an einem Rahmenelement 20, das fest über einen Aufnahmeflansch 10 mit dem Manipulator 21 verbunden ist, angelenkt. An ihrem jeweils anderen Ende sind die beiden ersten Parallelogrammlenker 11,12 an einem Vertikalabschnitt eines Verbindungshebels 19 schwenkbar befestigt, wobei sie eine erste Parallelogrammschwinge bilden. Diese beiden, ersten Parallelogrammlenker 11,12 vermitteln eine vertikale Ausgleichsbewegung, wie noch näher ausgeführt werden wird. Zwei zweite Parallelogrammlenker 15,16 sind an einem Horizontalabschnitt des Verbindungshebels 19 angelenkt, und an ihrem jeweils anderen Ende an einem Horizontallenker 22 schwenkbar befestigt, wobei sie eine zweite Parallelogrammschwinge bilden. Diese beiden, zweiten Parallelogrammlenker 15,16 vermitteln eine horizontale Ausgleichsbewegung, wie ebenfalls noch näher ausgeführt werden wird. Am Horizontallenker 22 ist schließlich der Schweißkopf 1 befestigt.

Der Verbindungshebel 19 bildet somit die Aufhängung für die beiden ersten Parallelogrammlenker 11,12, sowie die beiden zweiten Parallelogrammlenker 15,16, und stellt eine kinematische Kopplung der ersten und zweiten Parallelogrammschwinge dar. Der Verbindungshebel 19 ist dabei über eine Kupplung mit dem vertikal beweglichen Stempel des Vertikalzylinders 18 verbunden, der wiederum am Rahmenelement 20 befestigt ist. Der Vertikalzylinder 18 ist vorzugsweise ein Pneumatikzylinder, und bewirkt eine vertikale Bewegung des Verbindungshebels 19, die auf die ersten Parallelogrammlenker 11,12, sowie auf die zweiten Parallelogrammlenker 15,16 übertragen wird, und in weiterer Folge eine vertikale Bewegung des Schweißkopfs 1 sowie des Führungssporns 3 bewirkt. Über den Vertikalzylinder 18 wird die vertikale Andruckkraft des Führungssporns 3 sowie des Zusatzdrahtes geregelt. Die horizontale Andruckkraft wird über einen Horizontalzylinder 17 geregelt, der einerseits am Rahmenelement 20 befestigt ist, und dessen Stempel andererseits an einem der beiden zweiten Parallelogrammlenker 15,16 angelenkt ist.

Des Weiteren sind bei der gezeigten Ausführungsform der Stelleinrichtung noch ein Arretierzylinder 23 und ein Klemmzylinder 24 vorgesehen. Der Arretierzylinder 23 ist auf einer der beiden zweiten Parallelogrammlenker 15,16 der zweiten Parallelogrammschwinge befestigt und mit einem Kegelbolzen versehen, der mit einer Kegelpfanne am vertikalen Abschnitt des Verbindungshebels 19 zusammenwirkt. Dadurch kann der horizontale Ausgleich über die beiden zweiten Parallelogrammlenker 15,16 in der Mittelstellung fixiert werden, sodass lediglich eine Bewegung in vertikaler Richtung möglich ist. Der Klemmzylinder 24 ermöglicht eine Überbrückung des Parallelogrammgelenks, indem mithilfe eines Klemmblechs 25 eine starre Verbindung zwischen dem Rahmenelement 20 und dem Schweißkopf 1 hergestellt wird. Der Klemmzylinder 24 ist hierzu am Rahmenelement 20 befestigt, und presst bei Betätigung das Klemmblech 25, das fest mit dem Schweißkopf 1 verbunden ist, gegen einen Klemmarm 26, der Teil des Rahmenelements 20 ist. Dadurch kann die Stelleinrichtung in jeder Stellung fixiert werden.

Im Betrieb einer erfindungsgemäßen Schweißvorrichtung setzt der Manipulator 21 den Schweißkopf 1 an die Verbindungsfuge, wobei der Führungssporn 3 in die Fuge eingreift. Diese Positionierung erfolgt gemäß dem Bewegungsprogramm, das dem Manipulator 21 vorgegeben ist. Über den Horizontalzylinder 17 und den Vertikalzylinder 18 erfolgt nun eine Regelung der horizontalen und vertikalen Anpresskräfte über ein separates Regelungsprogramm, mit dem die Schweißvorrichtung sowie die Stelleinrichtung kontrolliert werden. Der Manipulator 21 und die Schweißvorrichtung werden in weiterer Folge in Bewegung versetzt, wobei der Führungssporn die Verbindungsfuge entlang gleitet.

Änderungen des Fugenverlaufes wirken sich nun auf die Positionierung des Führungssporns 3 aus, der seine Bewegungen über den Führungshebel 4 und den Schweißkopf 1 auf die Stelleinrichtung überträgt. Die Stelleinrichtung regelt die Positionierung des Schweißkopfes 1 unabhängig von den Bewegungen des Manipulators 21 auf den geänderten Fugenverlauf nach, sodass die Andrückkräfte des Führungssporns 3 auf das Werkstück wieder innerhalb vorgegebener Werte fallen. Aufgrund der mechanischen Detektierung des wahren Fugenverlaufes erfolgt eine rasche Abtastung des wahren Nahtverlaufes, und eine entsprechende Nachjustierung des Schweißkopfes 1 in Echtzeit auch bei hohen Vorschubgeschwindigkeiten. Dabei stellen sich aufgrund der Verwendung des Parallelogrammgelenks keine Winkellageänderungen des Schweißkopfes 1 relativ zum Werkstück bei vorgenommenen Bahnkorrekturen ein. Des Weiteren wird durch die feste Montage des Führungssporns 3 und des Führungshebels 4 am Schweißkopf 1 erreicht, dass sich speziell bei Lichtbogenverfahren mit Kaltdrahtzuführung keine Abstandsänderungen zwischen der Elektrode 2 des Schweißkopfes 1 und der Spitze des Zusatzdrahtes während des Schweißvorganges ergeben, insbesondere auch bei Schwingungen des führenden Manipulators 21. Die erfindungsgemäße Vorrichtung ist aufgrund der mechanischen Umsetzung der Stelleinrichtung des Weiteren unempfindlich gegenüber elektromagnetische Einflüsse und Fremdlicht, und weist eine geringe Masseträgheit bei hoher Leichtgängigkeit der Regelmechanik auf.

## Patentansprüche

1. Schweißvorrichtung zur Befestigung an einem Manipulator (21), der die Schweißvorrichtung entlang der Verbindungsfuge von Werkstücken bewegt, wobei die Schweißvorrichtung einen Schweißkopf (1), eine Elektrode (2) und eine Drahtzuführung (5) zur Zufuhr eines Zusatzdrahtes zur Elektrode (2) aufweist, und der Schweißkopf (1) über eine mechanische Stelleinrichtung, die ein Parallelogrammgelenk und einen Führungssporn (3) umfasst, mit dem Manipulator (21) verbunden ist, wobei der Führungssporn (3) der Geometrie der Verbindungsfuge angepasst und über einen Führungshebel (4) mit dem Schweißkopf (1) verbunden ist, und der Schweißkopf (1) mit dem Parallelogrammgelenk verbunden ist, **dadurch gekennzeichnet, dass** der Zusatzdraht über den Führungssporn (3) geführt ist, und den Führungssporn (3) über eine Drahtführungsdüse verlässt.

2. Schweißvorrichtung nach Anspruch 1, **dadurch gekennzeichnet, dass** das Parallelogrammgelenk aus zwei Parallelogrammschwingen, die über einen vertikal verschiebbaren Verbindungshebel (19) gekoppelt sind und jeweils zwei Parallelogrammlenker (11, 12, 15, 16) umfassen, gebildet wird, wobei die beiden Parallelogrammlenker (11,12) der ersten Parallelogrammschwinge an einem mit dem Manipulator (21) fest verbundenen Rahmenelement (20) angelenkt sind, und an ihrem jeweils anderen Ende an einem Vertikalabschnitt des Verbindungshebels (19) schwenkbar befestigt sind, und die beiden Parallelogrammlenker (15,16) der zweiten Parallelogrammschwinge an einem Horizontalabschnitt des Verbindungshebels (19) angelenkt sind, und an ihrem jeweils anderen Ende an einem Horizontallenker (22), der mit dem Schweißkopf (1) verbunden ist, schwenkbar befestigt sind.

3. Schweißvorrichtung nach Anspruch 2, **dadurch gekennzeichnet, dass** die Stelleinrichtung weiters einen Vertikalzylinder (18) und einen Horizontalzylinder (17), vorzugsweise in Form von Pneumatikzylindern, umfasst, die sich jeweils am Rahmenelement (20) abstützen, wobei der Stempel des Vertikalzylinders (18) mit dem Verbindungshebel (19) verbunden ist und die vertikale Verschiebung des Verbindungshebels (19) bewirkt, und der Stempel des Horizontalzylinders (17) an einem der beiden Parallelogrammlenker (15,16) der zweiten Parallelogrammschwinge angelenkt ist und eine horizontale Verschiebung des Horizontallenkers (22) bewirkt.

4. Schweißvorrichtung nach Anspruch 2 oder 3, **dadurch gekennzeichnet, dass** die Stelleinrichtung weiters einen Arretierzylinder (23) umfasst, der auf einer der beiden Parallelogrammlenker (15, 16) der zweiten Parallelogrammschwinge befestigt und mit einem Kegelbolzen versehen ist, der mit einer Kegelpfanne am vertikalen Abschnitt des Verbindungshebels (19) zusammenwirkt.

5. Schweißvorrichtung nach einem der Ansprüche 2 bis 4, **dadurch gekennzeichnet, dass** die Stelleinrichtung weiters einen Klemmzylinder (24) umfasst, der am Rahmenelement (20) befestigt ist, sowie ein Klemmblech (25), das fest mit dem Schweißkopf (1) verbunden ist, wobei bei Betätigung des Klemmzylinders (24) das Klemmblech (25) in reibungsschlüssiger Verbindung mit einem Klemmarm (26) gerät, der Teil des Rahmenelements (20) ist.

6. Schweißvorrichtung nach einem der Ansprüche 1 bis 5, **dadurch gekennzeichnet, dass** zur Sicherung der Arbeitsbereichsgrenzen des Parallelogrammgelenks Grenztaster vorgesehen sind.

7. Schweißvorrichtung nach einem der Ansprüche 1 bis 6, **dadurch gekennzeichnet, dass** der Führungssporn (3) mit dem Führungshebel (4) lösbar verbunden ist.

8. Schweißvorrichtung nach einem der Ansprüche 1 bis 7, **dadurch gekennzeichnet, dass** die Drahtführungsdüse eine ovale Austrittsöffnung für den Zusatzdraht aufweist.

9. Schweißvorrichtung nach Anspruch 8, **dadurch gekennzeichnet, dass** der Führungshebel (4) mit einer Kühlmittelzufuhr (6) versehen ist.

10. Schweißvorrichtung nach Anspruch 8 oder 9, **dadurch gekennzeichnet, dass** der Schweißkopf (1) über einen Kreuzschlitten (9) mit dem Führungshebel (4) verbunden ist, wobei der Kreuzschlitten (9) zwei Justierschrauben zur Veränderung der relativen Lage des mit dem Führungshebel (4) verbundenen Führungssporns (3) zur Elektrode (2) in Höhen- und Seitenlage aufweist.

## Claims

1. A welding apparatus for fixing to a manipulator (21) which moves the welding apparatus along the joining seam of workpieces, with the welding apparatus comprising a welding head (1), an electrode (2) and a wire feed (5) for feeding an additional wire to the electrode (2), and with the welding head (1) being connected to the manipulator (21) via a mechanical adjusting device which comprises a parallelogram joint and a guide spur (3), with the guide spur (3) being adapted to the geometry of the joining seam and being connected to the welding head (1) via a guide lever (4), and the welding head (1) being connected to the parallelogram joint, **characterized in that** the additional wire is guided via the guide spur (3) and leaves the guide spur (3) via a wire guide nozzle.

2. A welding apparatus according to claim 1, **characterized in that** the parallelogram joint is formed by two parallelogram links which are coupled via a vertically displaceable connecting lever (19) and respectively comprise two parallelogram guide rods (11, 12, 15, 16), with the two parallelogram guide rods (11, 12) of the first parallelogram link being linked to a frame element (20) which is fixedly connected to the manipulator (21) and are pivotably fixed at their respective other end to a vertical section of the connecting lever (19), and the two parallelogram guide rods (15, 16) of the second parallelogram link are linked to a horizontal section of the connecting lever (19), and are pivotably fixed at their respective other end to a horizontal guide rod (22) which is connected to the welding head (1).

3. A welding apparatus according to claim 2, **characterized in that** the adjusting device further comprises a vertical cylinder (18) and a horizontal cylinder (17), preferably in form of pneumatic cylinders, which respectively rest on the frame element (20), with the plunger of the vertical cylinder (18) being connected to the connecting lever (19) and causing the vertical displacement of the connecting lever (19), and with the plunger of the horizontal cylinder (17) being linked to one of the two parallelogram guide rods (15, 16) of the second parallelogram link and causing a horizontal displacement of the horizontal guide rod (22).

4. A welding apparatus according to claim 2 or 3, **characterized in that** the adjusting device further comprises a locking cylinder (23) which is fixed to one of the two parallelogram guide rods (15, 16) of the second parallelogram link and is provided with a taper pin which cooperates with a conical socket on the vertical section of the connecting lever (19).

5. A welding apparatus according to one of the claims 2 to 4, **characterized in that** the adjusting device further comprises a clamping cylinder (24) which is fastened to the frame element (20) and a clamping plate (25) which is rigidly connected to the welding head (1), with the clamping plate (25) being in frictionally engaged connection with a clamping arm (26) upon actuation of the clamping cylinder (24), which arm is a part of the frame element (20).

6. A welding apparatus according to one of the claims 1 to 5, **characterized in that** limit switches are provided for securing the working range boundaries of the parallelogram joint.

7. A welding apparatus according to one of the claims 1 to 6, **characterized in that** the guide spur (3) is detachably connected to the guide lever (4).

8. A welding apparatus according to one of the claims 1 to 7, **characterized in that** the wire guide nozzle comprises an oval outlet opening for the additional wire.

9. A welding apparatus according to claim 8, **characterized in that** the guide lever (4) is provided with a coolant supply (6).

10. A welding apparatus according to claim 8 or 9, **characterized in that** the welding head (1) is connected via a compound slide (9) with the guide lever (4), with the compound slide (9) comprising two adjusting screws for changing the relative position of the guide spur (3) connected to the guide lever (4) in relation to the electrode (2) in height and lateral position.

## Revendications

1. Dispositif de soudage destiné à être fixé sur un manipulateur (21) qui déplace le dispositif de soudage le long du joint d'assemblage de pièces, dans lequel le dispositif de soudage possède une tête de soudage (1), une électrode (2) et une alimentation en fil (5) pour amener un fil d'additif à l'électrode (2), et la tête de soudage (1) est reliée au manipulateur (21) par l'intermédiaire d'un dispositif de réglage mécanique comprenant une articulation à parallélogramme et un ergot de guidage (3), l'ergot de guidage (3) étant adapté à la géométrie du joint d'assemblage et étant relié par l'intermédiaire d'un levier de guidage (4) à la tête de soudage (1), et la tête de soudage (1) étant reliée à l'articulation à parallélogramme, **caractérisé en ce que** le fil d'additif est guidé par-dessus l'ergot de guidage (3) et sort de l'ergot de guidage (3) par une buse de guidage de fil.

2. Dispositif de soudage selon la revendication 1, **caractérisé en ce que** l'articulation à parallélogramme est formée de deux bras de parallélogramme qui sont couplés par un levier de liaison (19) déplaçable verticalement et comprennent chacun deux bielles de parallélogramme (11, 12, 15, 16), les deux bielles de parallélogramme (11, 12) du premier bras de parallélogramme étant articulées sur un élément de cadre (20) relié de manière fixe au manipulateur (21) et étant fixées à leur autre extrémité de manière pivotante sur une partie verticale du levier de liaison (19), et les deux bielles de parallélogramme (15, 16) du deuxième bras de parallélogramme étant articulées sur une partie horizontale du levier de liaison (19) et étant fixées à leur autre extrémité de manière pivotante sur une bielle horizontale (22) qui est reliée à la tête de soudage (1).

3. Dispositif de soudage selon la revendication 2, **caractérisé en ce que** le dispositif de réglage comprend en outre un vérin vertical (18) et un vérin horizontal (17), de préférence sous la forme de vérins pneumatiques, qui s'appuient chacun sur l'élément de cadre (20), le piston du vérin vertical (18) étant relié au levier de liaison (19) et réalisant le déplacement vertical du levier de liaison (19), et le piston du vérin horizontal (17) étant articulé sur l'une des deux bielles de parallélogramme (15, 16) du deuxième bras de parallélogramme et réalisant un déplacement horizontal de la bielle horizontale (22).

4. Dispositif de soudage selon la revendication 2 ou 3, **caractérisé en ce que** le dispositif de réglage comprend en outre un vérin de blocage (23) qui est fixé sur l'une des deux bielles de parallélogramme (15,16) du deuxième bras de parallélogramme et qui est munie d'un goujon conique qui coopère avec un réceptacle conique sur la partie verticale du levier de liaison (19).

5. Dispositif de soudage selon l'une des revendications 2 à 4, **caractérisé en ce que** le dispositif de réglage comprend en outre un vérin de serrage (24) qui est fixé à l'élément de cadre (20), ainsi qu'une tôle de serrage (25) qui est reliée de manière fixe à la tête de soudage (1), la tôle de serrage (25) venant en liaison par friction avec un bras de serrage (26) qui fait partie de l'élément de cadre (20) lors de l'actionnement du cylindre de serrage (24).

6. Dispositif de soudage selon l'une des revendications 1 à 5, **caractérisé en ce que** des contacts de fin de course sont prévus pour sécuriser les limites de la zone de travail de l'articulation à parallélogramme.

7. Dispositif de soudage selon l'une des revendications 1 à 6, **caractérisé en ce que** l'ergot de guidage (3) est relié de manière amovible au levier de guidage (4).

8. Dispositif de soudage selon l'une des revendications 1 à 7, **caractérisé en ce que** la buse de guidage de fil présente une ouverture de sortie ovale pour le fil d'additif.

9. Dispositif de soudage selon la revendication 8, **caractérisé en ce que** le levier de guidage (4) est muni d'une arrivée de fluide de refroidissement (6).

10. Dispositif de soudage selon la revendication 8 ou 9, **caractérisé en ce que** la tête de soudage (1) est reliée par l'intermédiaire d'un chariot en croix (9) au levier de guidage (4), lequel chariot en croix (9) présente deux vis d'ajustement pour modifier la position relative verticale et latérale de l'ergot de guidage (3) relié au levier de guidage (4) par rapport à l'électrode (2).
